# FASCICULE DE BREVET EUROPEEN

(11) **EP 1 480 540 B1**
(45) Date de publication et mention de la délivrance du brevet: **14.02.2007**
(21) Numéro de dépôt: 03718908.1
(22) Date de dépôt: 26.02.2003
(51) Int. Cl.: A47J 31/40

(54) **DISPOSITIF DE PRODUCTION DE BOISSON PAR INFUSION**
VORRICHTUNG ZUR HERSTELLUNG VON INFUSIONSGETRÄNKEN
DEVICE FOR PRODUCING BEVERAGE BY INFUSION

(30) Priorité: 01.03.2002 FR 0202733; 03.06.2002 FR 0206765; 04.10.2002 FR 0212295
(43) Date de publication de la demande: 01.12.2004
(73) Titulaire: Compagnie Méditerraneenne des Cafes, 06510 Carros (FR)
(72) Inventeur: BLANC, Jean-Pierre C/O Off.Méd. des Brevets, 20 rue de la Liberté F-06000 NICE (FR); FERRIER, Christian C/O Office Méditerranéen de Bre, 20 rue de la liberté F-06000 Nice (FR)
(74) Mandataire: Hautier, Jean-Louis
(86) Numéro de dépôt international: PCT/FR2003/000612
(87) Numéro de publication internationale: WO 2003/073897

(56) Documents cités:
- EP-A- 1 153 561
- EP-A- 1 219 217
- FR-A- 2 713 905
- US-A- 5 520 093

## Description

La présente invention concerne un dispositif de production de boisson par infusion d'un produit contenu dans une dosette.

Elle trouvera particulièrement son application dans le domaine de la production de café à partir de mouture de café préemballée dans des dosettes.

De telles dosettes existent par ailleurs déjà et sont généralement constituées sous forme d'un assemblage de deux feuilles de papier filtre réalisant un espace intermédiaire d'emballage de mouture de café.

Diverses machines d'extraction de boissons chaudes à partir de mouture sont connues.

*Particulièrement, le document WO-A-00*/*38558 divulgue une chambre d'extraction pour machine automatique pour la préparation de boissons chaudes dans laquelle la chambre d'extraction est prévue pour recevoir des dosettes ou pastilles prédosées en café moulu.*

*La chambre est constituée de deux parties, chacune mobile dans un plan horizontale manière à pouvoir s'écarter ou se rapprocher l'une de l'autre.*

*Par ailleurs, selon ce document, les deux parties sont également mobiles de façon oscillante.*

Une machine ainsi équipée donne globalement satisfaction mais nécessite l'entraînement des deux parties constitutives de la chambre.

Il faut donc prévoir une motorisation suffisamment puissante et un système de transmission de puissance relativement complexe nécessitant la synchronisation des mouvements.

*On connaît par ailleurs, du document FR-A-2.745.995 un appareil pour la fabrication de boissons dans lequel la chambre d'infusion est constituée par deux demi logements, l'un porté par une f*a*ce du corps de l'appareil, l'autre fixé sur une face de la chaudière, ces deux faces étant en regard l'une de l'autre.*

*La chambre d'infusion est formée lorsque les deux demi logements se jouxtent.*

*Cet assemblage de la chambre s'effectue par un mouvement de translation de l'un des logements.*

*L'appareil ainsi présenté nécessite l'association de différents moyens de butée assurant la rétention de la dosette au moment de l'alimentation puis lors de son entrée dans la chambre d'infusion.*

*Une mobilité des moyens de butées est également nécessaire pour assurer l'éjection des doses usagées.*

L'art antérieur divulgué par cette antériorité impose la réalisation distincte de moyens de butée et d'éjection des dosettes.

On connaît du document US 5 520 093 une machine à café pour dosettes en bande dans laquelle la chambre d'infusion comporte une partie mobile en rotation et en translation au moyen d'un organe formant came. Outre le caractère fort complexe de la mise en place et d'éjection des dosettes, ce document présente un actionnement complexe et fort lourd impliquant obligatoirement de réaliser l'étanchéité de la chambre par l'intermédiaire du système à came.

Le document EP 1 153 561 présente quant à lui une machine à café pour capsule avec un capot mobile pour ouvrir ou fermer la chambre d'infusion. Un système complexe est également prévu pour appliquer la capsule de façon serrée.

Compte tenu de l'actionnement actuel des chambres d'infusion, les moyens de mise en mouvement des parties de la chambre doivent être conçus de façon lourde et complexe, en particulier pour assurer l'étanchéité en position fermée. Il faut en effet tenir compte du fait qu'une machine de type espresso produit une eau chaude à une pression souvent de l'ordre de 15 bars.

La présente invention permet de remédier à ces inconvénients.

Elle présente pour ce faire un dispositif de production de boisson amélioré.

Un premier avantage de l'invention est de permettre la réalisation des phases d'ouverture et de fermeture de la chambre d'infusion ainsi que la réalisation des phases d'introduction et d'éjection de dosettes par l'intermédiaire d'un moins grand nombre de mouvements et, particulièrement, par le mouvement de rotation de translation combinée d'une seule des parties constitutives de la chambre.

Un autre avantage de l'invention est de ne nécessiter, dans un mode préféré de réalisation, qu'un seul moyen d'entraînement pour un mouvement de rotation et un mouvement de translation assurant ainsi à coup sûr et à moindre frais la synchronisation.

Suivant une variante préférée, l'invention est telle qu'elle peut être utilisée et actionnée par un utilisateur par le biais d'un levier.

L'usage du dispositif ici proposé peut donc s'apparenter à celui d'une machine conventionnelle présentant un porte filtre à poignée, tout en réalisant les phases d'extraction de la boisson de façon automatique.

Un moyen de serrage additionnel fonctionne en complément pour assurer ou parfaire l'étanchéité de la chambre en position de lixiviation.

D'autres buts et avantages apparaîtront au cours de la description qui suit d'un mode de réalisation préféré de l'invention qui n'est cependant pas limitatif.

La présente invention concerne un dispositif de production de boisson par infusion d'un produit contenu dans une dosette, comportant une chambre d'infusion apte à recevoir une dosette et comprenant deux parties configurées pour être rapprochées ou éloignées pour fermer ou ouvrir la chambre d'infusion, dispositif tel que l'une seulement des parties a une mobilité en rotation apte à mettre en butée la dosette dans ladite partie et que la partie mobile en rotation a une mobilité en translation pour ouvrir ou fermer la chambre d'infusion, caractérisé par le fait qu'il comporte des moyens additionnels de serrage en fermeture des deux parties de la chambre d'infusion qui sont des moyens de déplacement en translation de la partie fixe en rotation.

Suivant des variantes préférées, le dispositif est tel que :
- les moyens de déplacement sont constitués par un vérin,
- le vérin est hydraulique et alimenté par la chaudière alimentant la chambre d'infusion,
- la chambre du vérin est formée entre une face de la chaudière et un organe mobile solidaire de la partie fixe en rotation de la chambre d'infusion, la face comportant une sortie d'alimentation en eau chaude,
- il comporte une membrane élastique d'étanchéité entre ladite face et ledit organe mobile pour fermer de façon étanche la chambre du vérin,
- l'organe mobile comporte un passage d'alimentation de la chambre d'infusion formé entre la chambre du vérin et une douchette présente sur la partie fixe en rotation,
- le passage d'alimentation présente une soupape configurée pour ouvrir le passage d'alimentation à partir d'une pression supérieure à la pression de travail du vérin,
- il comporte un ressort de rappel de l'organe mobile du vérin,
- il comporte un moyen d'entraînement commun pour la mobilité en rotation et la mobilité en translation de la partie mobile,
- le moyen d'entraînement est une came présentant :
   - une première surface extérieure d'appui d'un organe translatif couplé à la partie mobile ;
   - une deuxième surface extérieure d'appui d'une extrémité d'un bras pivotant couplé à la partie mobile ;
- la came est actionnée en rotation par un levier,
- le moyen d'entraînement commun comporte un arbre d'entraînement rotatif couplé à la partie mobile par au moins une biellette montée pivotante entre ledit arbre d'entraînement et ladite partie mobile,
- il comporte un organe translatif solidaire de la partie mobile dans son mouvement de translation et par rapport auquel elle est mobile en rotation,
- il présente des moyens de guidage en translation de l'organe translatif,
- l'arbre est actionné en rotation par un levier,
- il comporte des moyens de guidage de la dosette,
- les moyens de guidage comprennent une glissière avec au moins une rainure apte à recevoir la périphérie d'une dosette,
- les moyens de guidage sont montés translatifs pour suivre le mouvement de rapprochement ou d'éloignement des parties,
- la mobilité de la partie mobile est configurée pour faire face à la partie fixe de façon parallèle avant leur mise en contact, durant la phase de fermeture de la chambre d'infusion.

Les dessins ci-joints sont donnés à titre d'exemples et ne sont pas limitatifs de l'invention. Ils représentent seulement un mode de réalisation de l'invention et permettront de la comprendre aisément.
La figure 1 est une vue en coupe du dispositif selon un premier mode de réalisation de l'invention.
La figure 2 est une autre vue en coupe dans une configuration différente de la chambre d'infusion.
La figure 3 est une vue de côté du dispositif selon l'invention.
Les figures 4 et 5 en sont respectivement des vues de dessus et une vue de face.
La figure 6 est une vue en perspective du dispositif lors d'une phase d'extraction du café.
La figure 7 est une vue en perspective du dispositif en position de chargement d'une dosette.
La figure 8 illustre schématiquement les phases de mouvement du dispositif selon l'invention.
Les figures 9 à 12 et 9 bis, 10bis illustrent quatre étapes successives de fonctionnement du dispositif.
Les figures 13 et 14 présentent en vue de côté, le mouvement de translation des moyens de guidage.
La figure 15 est une vue générale en perspective du dispositif de l'invention.
La figure 16 en est une vue de dessus.
Les figures 17 et 18 sont respectivement des vues de côté et en coupe longitudinale du dispositif de l'invention en position d'alimentation en dosettes.
Les figures 19 et 20 sont respectivement des vues de côté et en coupe du dispositif de l'invention dans une position de réception de dosettes dans la chambre d'infusion.
Les figures 21 et 22 sont respectivement des vues de côté et en coupe longitudinale du dispositif de l'invention en position d'extraction.
La figure 23 montre partiellement en coupe le dispositif avec un mode préféré de réalisation des moyens additionnels de serrage en position de repos.
La figure 24 en montre une position active de serrage.

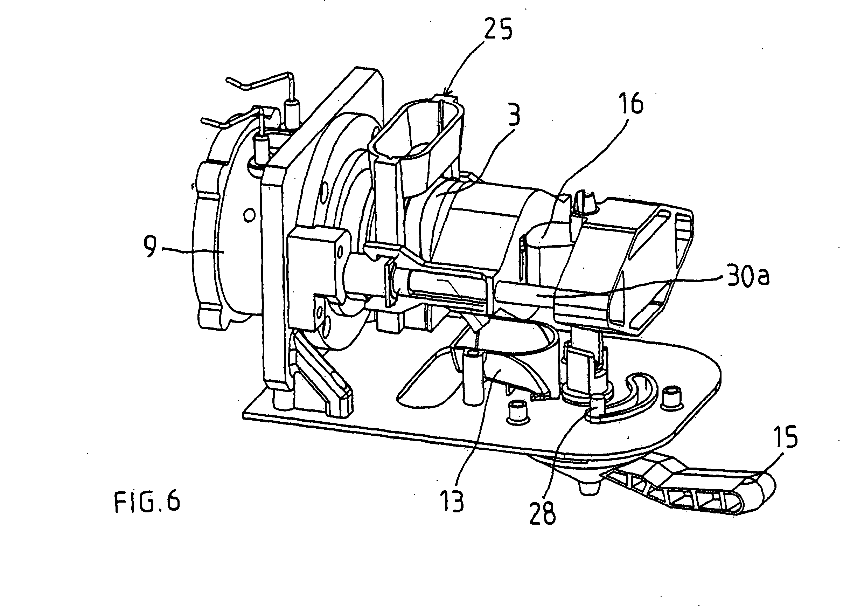

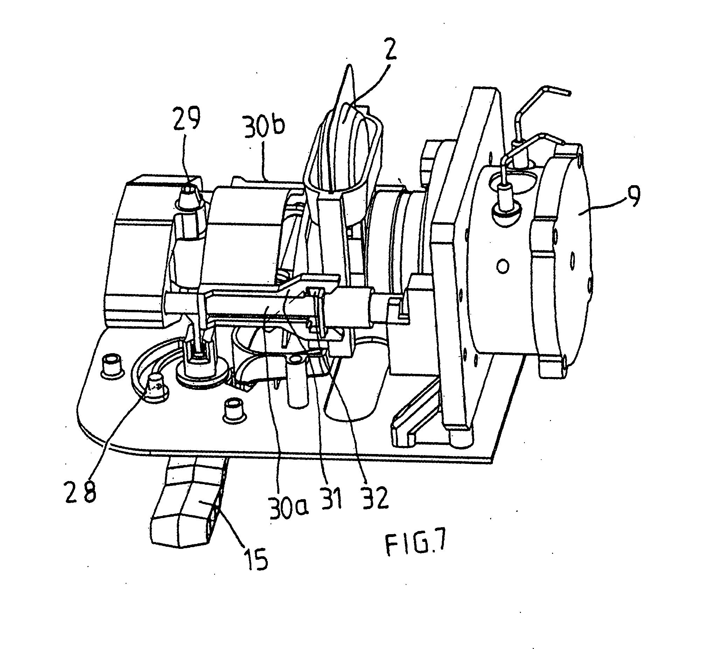

En se référant aux figures et particulièrement aux figures 6 et 7, le dispositif selon l'invention présente de façon conventionnelle une chaudière 9 apte à alimenter la chambre d'infusion 1 en eau chaude pour l'extraction de la matière contenue dans la dosette et particulièrement du café moulu.

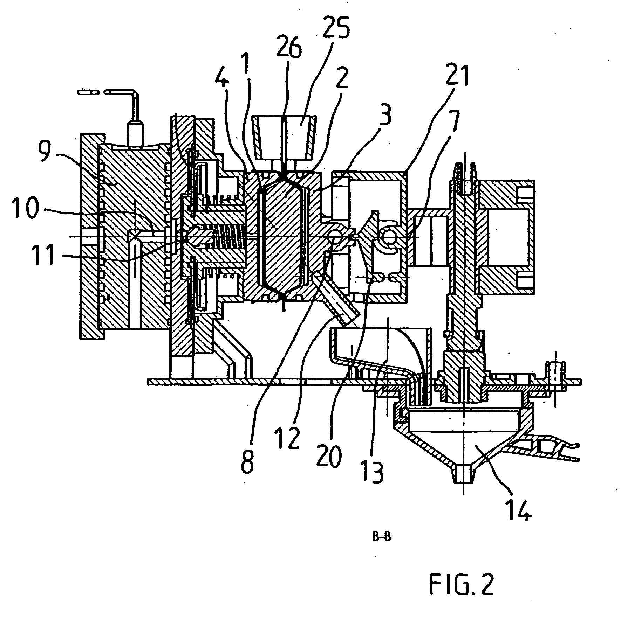

Tel que présenté en figure 2, un circuit d'eau 10 est présent au travers du dispositif avec une partie 11 d'admission de l'eau chaude dans la chambre d'infusion 1 et une partie de sortie 12 débouchant sur une goulotte 13 déversant la boisson dans un entonnoir 14 jusqu'au récipient de l'utilisateur.

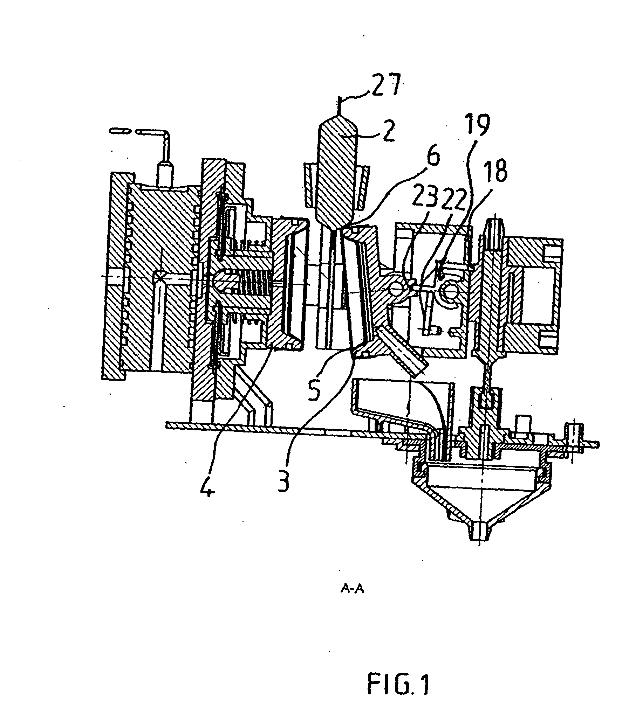

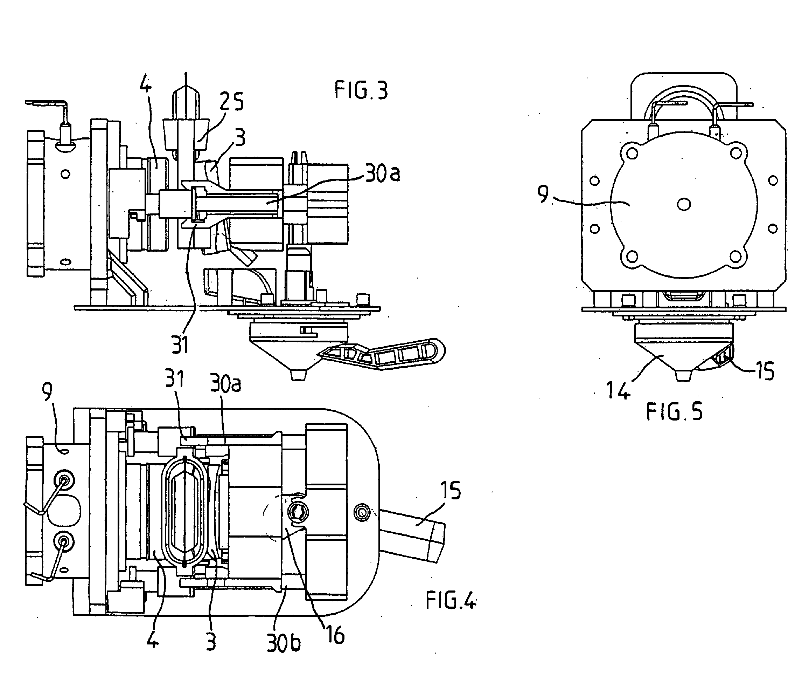

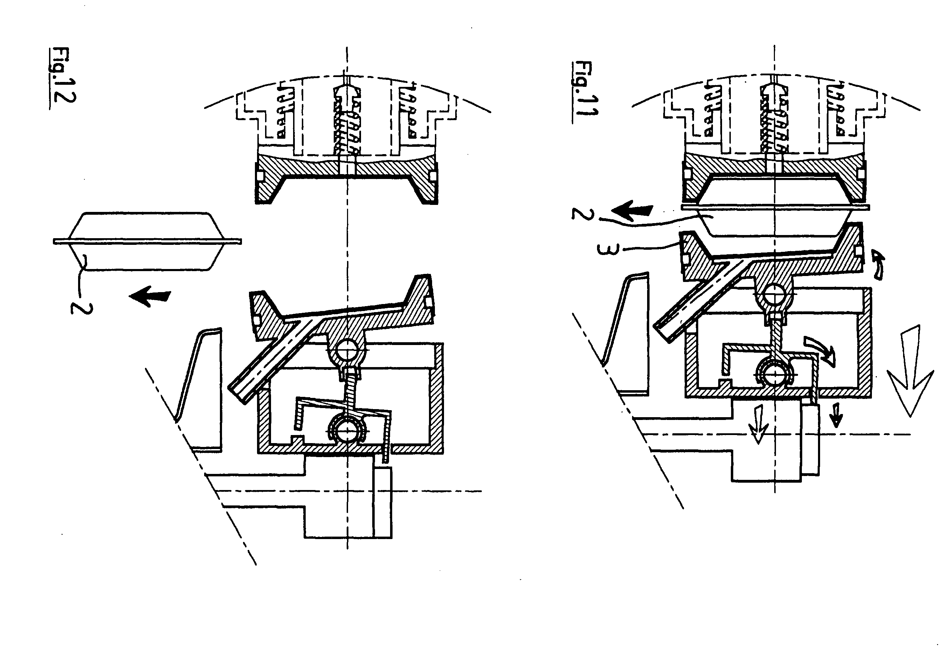

Tel que représenté sur les figures 1 à 14, la partie terminale de ce circuit peut être constituée sous la forme extérieure d'un porte filtre traditionnel comportant une poignée ici représentée par le levier 15 et une partie formant entonnoir 14.

Les dosettes utilisées pour le fonctionnement de la présente invention pourront être de type connues sur le marché actuellement.

De préférence mais de façon non limitative, on pourra utiliser les dosettes 2 comprenant une périphérie sensiblement plate et rigide assurant un maintien en forme de la dosette.

La chambre d'infusion 1 est constituée de deux parties 3, 4 aptes à être rapprochées pour fermer la chambre 1 tel que cela apparaît en figure 2 ou à être éloignées pour l'ouvrir comme cela ressort de la figure 1.

De façon préférentielle, et pour la suite de la description, c'est la partie 3 qui se déplace en translation pour se rapprocher ou s'éloigner de l'autre partie 4.

Par ailleurs, la partie 3 est animée d'un mouvement de rotation de course limitée pour passer entre divers positions lors du fonctionnement.

A titre préféré, on utilise un même moyen d'entraînement pour assurer la translation et la rotation de la partie mobile 3.

On décrit ci-après successivement deux variantes de réalisation de ce moyen d'entraînement.

### 1^{er} mode de réalisation :

On se réfère ici aux figures 1 à 14

On a repéré à titre d'exemple, en figure 2, la position de l'axe 8 de rotation de la partie mobile 3 et l'axe 7 de sa translation.

Pour la suite de la description et en référence aux dessins, on se place dans un exemple de machine à extraction horizontale (dans laquelle la dosette est positionnée sensiblement verticalement et reçoit l'eau chaude suivant un circuit sensiblement horizontal).

Cependant, d'autres orientations sont possibles sans sortir du cadre de l'invention.

Le moyen unique d'entraînement pourra être constitué par une came 16 actionnée en rotation et présentant une surface extérieure comportant deux parties.

Une première partie de la surface extérieure 17 de la came 16 assure l'appui de la came sur un organe translatif apte à transmettre le mouvement de translation à la partie mobile 3.

La deuxième surface extérieure de la came 16, repérée surface 18, en figure 1, assure l'appui d'une extrémité d'un bras pivotant 19 dont le mouvement de pivot est répercuté à la partie mobile 3 pour réaliser sa rotation.

Le couplage entre le bras pivotant 19 et la partie mobile 3 pourra être effectué au moyen d'un doigt 22 s'insérant dans une fourchette 23 de la partie mobile tel que représenté en figure 1.

L'axe du pivot du bras pivotant 19 est porté par une pièce de couplage 21 également visible en figure 1 et repérée en figure 2.

C'est cette pièce de couplage qui entraîne en translation la partie mobile 3 par appui sur la came 16.

D'autres moyens de transmission des mouvements de rotation et de translation à la partie mobile 3 sont également envisageables.

A titre préféré, le bras pivotant 19 comporte une extension formant limiteur de course 20 et apte à venir en butée avec une surface de butée lorsqu'une position angulaire prédéterminée de la partie mobile 3 est atteinte.

Tel est le cas en position d'ouverture vers le haut de la chambre d'infusion 1.

Suivant une première possibilité, la came 16 est entraînée en rotation par une motorisation.

Suivant une seconde possibilité, envisagée dans les figures, l'entraînement en rotation de la came 16 s'effectue par le biais d'un levier 15 pouvant être actionné par l'utilisateur.

Les figures 6 et 7 illustrent deux positions du levier 15.

Dans le cas de la figure 7, la position de levier 15 est telle qu'elle implique une position de la came 16 sensiblement correspondante à la phase de fonctionnement de la figure 1.

Dans ce cadre, la partie mobile 3 est inclinée vers le bas pour réaliser une surface de butée 6 en sa portion supérieure pour coopérer avec la surface extérieure inférieure de la dosette 2.

La surface 6 constitue ainsi une butée en phase d'alimentation de la dosette 2.

Suivant la position du levier 15 illustré à la figure 6, la came 16 a opéré une rotation pour parvenir à la position de fonctionnement illustrée à la figure 2, et dans laquelle la chambre d'infusion 1 est fermée en position d'extraction.

La course du levier 15 peut être limitée en rotation par l'intermédiaire d'une butée 28 de conception courante par exemple sous forme d'un doigt apte à se déplacer dans un trou oblong solidaire du châssis du dispositif.

Pour assurer ou optimiser l'étanchéisation de la chambre d'infusion 1 en position fermée, il est avantageux d'ajouter à la pression de fermeture opérée par l'utilisateur au moyen du levier 15, une pression additionnelle.

Dans ce cadre, un moyen additionnel de serrage en fermeture des deux parties 3, 4 de la chambre d'infusion 1 est constitué en complément, comme décrit plus précisément par la suite.

De façon avantageuse, le dispositif comprend également des moyens de guidage de la dosette 2 lors de son déplacement durant les phases de fonctionnement.

Dans ce cadre, on pourra constituer des moyens de guidage sous forme d'une glissière 25 constituée par deux rainures 26 aptes à encadrer la périphérie de la dosette 2.

La périphérie de ladite dosette 2 peut s'insérer dans chacune des rainures 26 ainsi constituées.

Des moyens de guidage sont avantageusement montés translatifs pour suivre le mouvement de rapprochement ou d'éloignement des deux parties.

En ce sens, ces moyens ont un déplacement couplé à celui de l'organe translatif 21 par l'intermédiaire de poussoir 31 représenté notamment en figure 7.

Le poussoir 31 comprend une partie en créneau 32 apte à constituer deux portions d'appui du poussoir 31 sur une surface correspondante des moyens de guidage.

De cette façon, le mouvement des moyens de guidage suit celui de l'organe translatif 21 au cours des phases de fonctionnement.

Par ailleurs, le vide constitué entre les deux surfaces d'appui formées par le créneau 32 assure un retard dans le déplacement des moyens de guidage apte à assurer d'abord une avance de la partie mobile 3 seule puis une avance couplée du moyen de guidage et de la partie mobile 3 vers la partie fixe 4.

Le système à poussoir ainsi constitué peut être réalisé de façon guidée autour de deux guides latéraux 30a, 30b assurant le guidage en translation des éléments mobiles et la cohésion des pièces constitutives du dispositif.

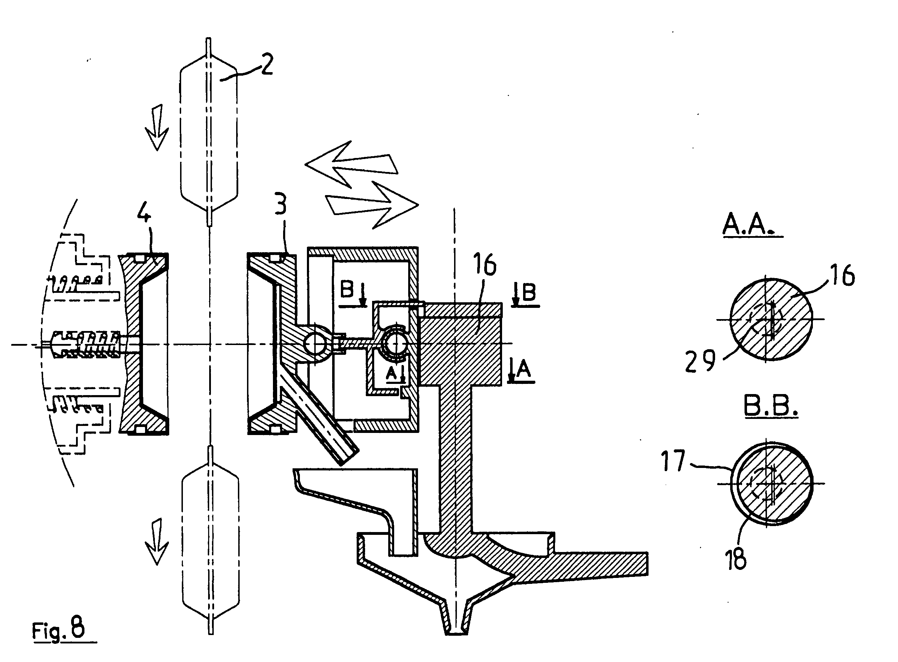

Les phases de fonctionnement du présent dispositif sont plus particulièrement illustrées aux figures 8 à 14.

La figure 8 schématise les différentes mobilités de la partie 3 de la chambre d'infusion 1.

Dans ce cadre, les flèches schématisent la translation apte à être opérée par la partie mobile 3 par le biais de la came 16.

Les coupes A-A et B-B de la figure 8 illustrent par ailleurs de façon schématique la réalisation de la came 16 et particulièrement la formation de deux surfaces extérieures d'appui 17 et 18.

La surface 18 est apte à recevoir l'extrémité du bras pivotant 19.

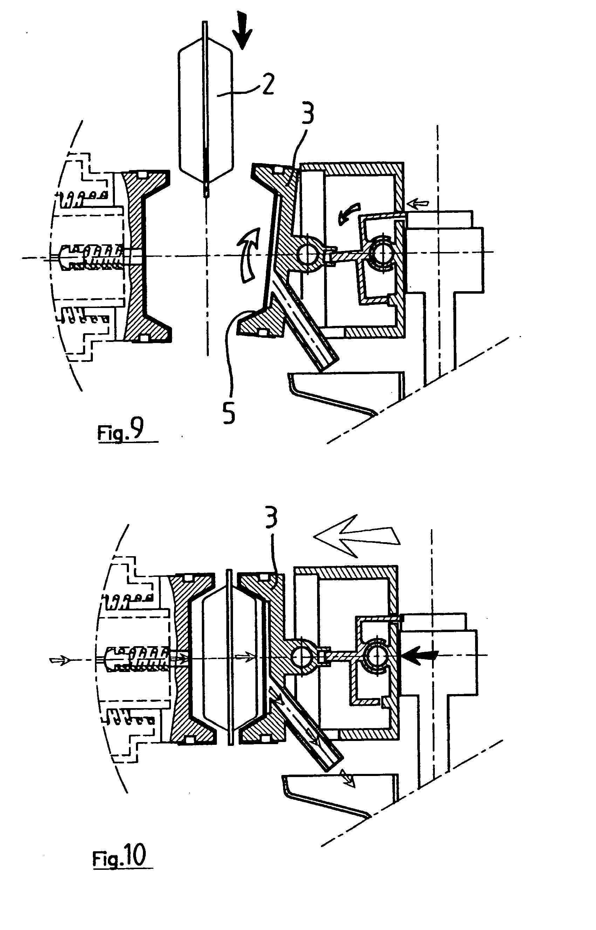

En référence aux figures 9 à 12 et 9bis, 10bis, quatre étapes successives de fonctionnement de l'invention sont illustrées.

En figure 9, la came 16 a été actionnée pour provoquer une rotation de la partie mobile 3 tendant à l'ouvrir pour accueillir une dosette 2.

La partie supérieure de la partie mobile 3 s'esquivant, la surface de butée d'alimentation 6 formée jusqu'alors à ce niveau, est escamotée et provoque la chute par gravité de la dosette 2.

Celle-ci est alors reçue par la partie mobile 3 dans son volume intérieur et elle s'applique sur la surface 5 constitutive d'une butée de réception.

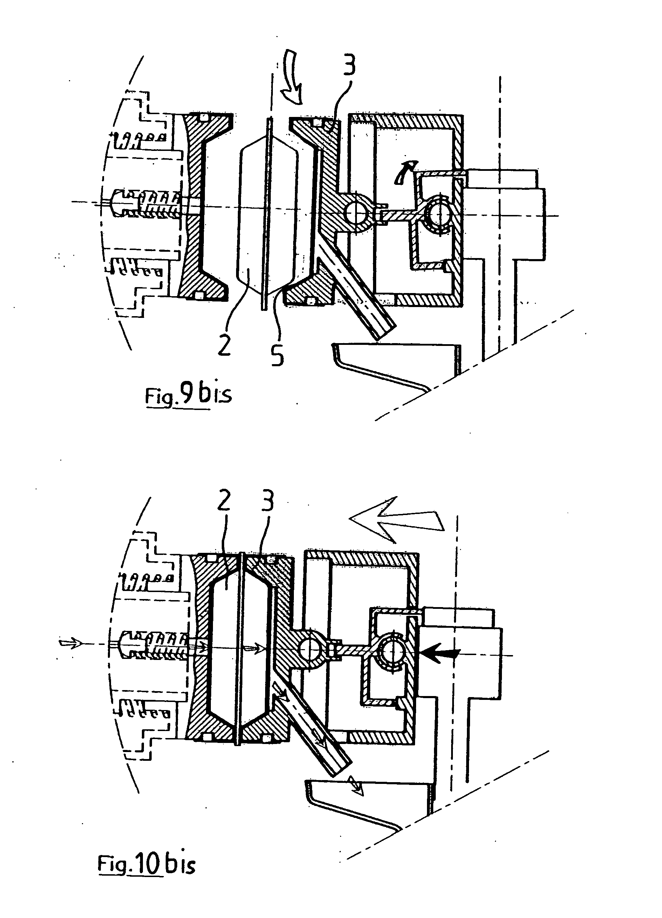

La poursuite de la rotation de la came 16 induit une translation de la partie mobile 3 qui est figurée à la figure 10.

Cependant, la partie mobile 3 poursuit également sa rotation de façon à parvenir à une situation sensiblement parallèle à celle de la partie fixe 4 avant que le mouvement de translation les mette en contact. Cela est visible en figures 9bis et 10bis. De cette façon, l'accostage de la partie mobile 3 s'opère de façon optimale, sur toute la surface de contact des deux parties 3, 4 en position fermée.

Dès que la chambre d'infusion est fermée, l'eau chaude est injectée dans la chambre d'infusion suivant le parcours des flèches creuses illustrées en figure 10.

La boisson est récupérée dans la goulotte puis dans l'entonnoir.

Dès que la lixiviation est opérée, un mouvement inverse de la came 16 induit un recul de la partie mobile 3 et son pivot dans le sens trigonométrique.

La partie mobile s'esquivant, la dosette 2 peut être libérée et chuter par gravité vers une zone de récupération.

La position ainsi pivotée de la partie mobile 3 vers le bas assure la formation à nouveau de la surface 6 de butée d'alimentation en partie supérieure de la partie mobile 3.

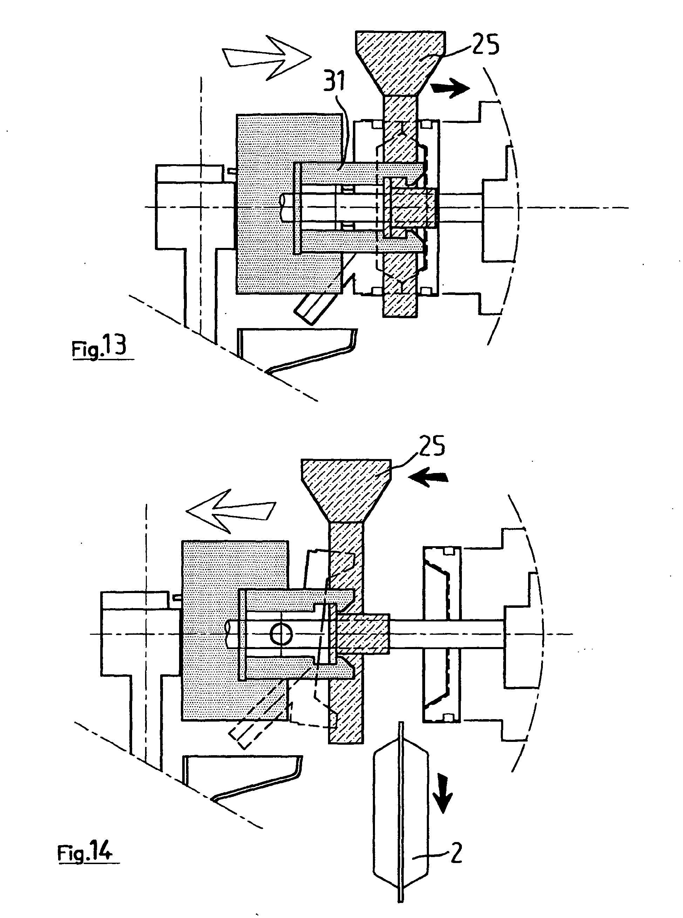

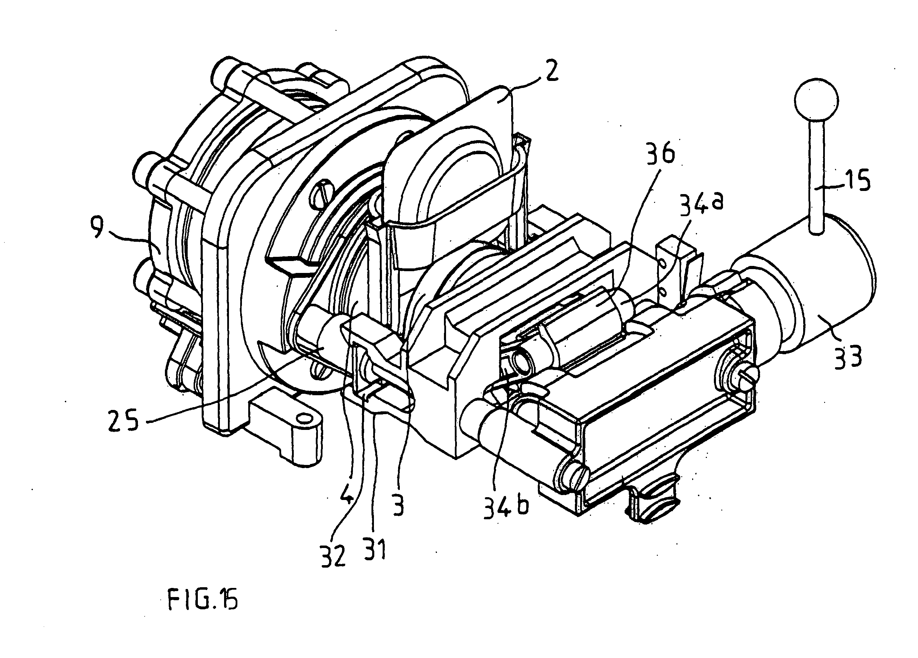

Les figures 13 et 14 illustrent en vue de côté la réalisation du mouvement de translation des moyens de guidage lorsque ceux-ci sont présents.

A ce sujet, on visualise le poussoir 31 apte à provoquer l'avancées des moyens de guidage 25 au fur et à mesure de l'avancée de la partie mobile 3.

Le créneau 32 présent sur le poussoir 31 assure cependant un retard dans la translation des moyens de guidage 25.

La figure 14 illustre la fin de l'évacuation de la dosette 2 qui s'opère dès que la partie mobile 3 est reculée et alors que les moyens de guidage 25 sont encore en position.

Une fois que la dosette est évacuée, les moyens de guidage 25 subissent à leur tour une translation dans le sens de la flèche creuse indiquée.

Le retard opéré dans la translation des moyens de guidage 25 assure le bon décollement de la dosette 2 avant le retour en position initiale complet du dispositif.

### 2^{ème} mode de réalisation :

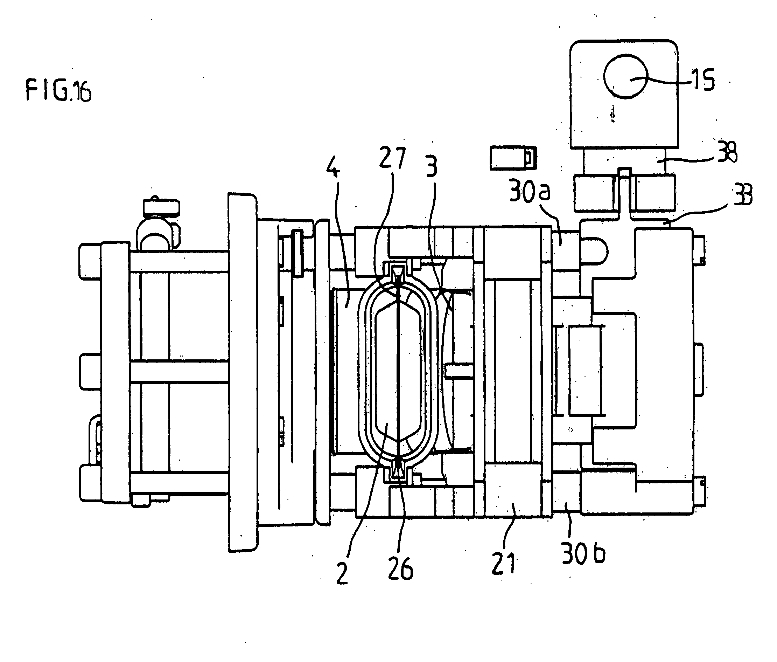

Un autre mode d'actionnement est ici présenté en référence aux figures 15 à 22.

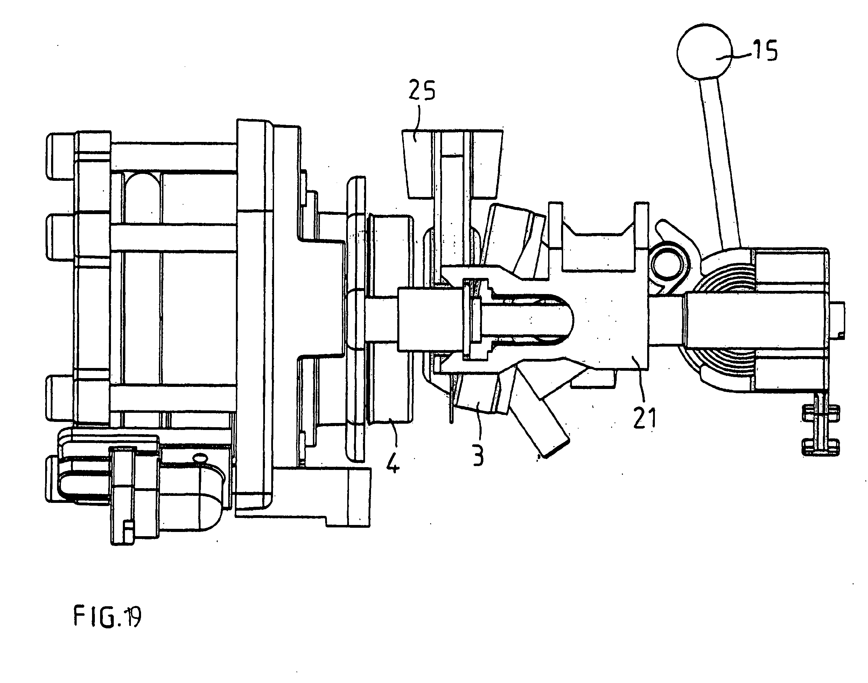

On a repéré à titre d'exemple, en figure 18, la position de l'axe 8 de rotation de la partie mobile 3 et l'axe 7 de sa translation.

Le moyen unique d'entraînement est constitué par un arbre d'entraînement 33 d'axe de rotation horizontal et apte à engendrer les mouvements de la partie mobile 3.

Pour ce faire, l'arbre 33 coopère avec au moins une biellette 34a, 34b mais préférentiellement deux biellettes.

Tel que cela est visible par exemple en figure 18, la biellette 34a, 34b est montée en liaison pivot 35, 36 d'une part sur l'arbre 33 et d'autre part, sur l'extrémité arrière de la partie mobile 3.

Un organe translatif 21 est également prévu pour suivre solidairement le mouvement de translation de la partie mobile 3 et assurer l'articulation en pivot selon l'axe 8 de ladite partie mobile 3.

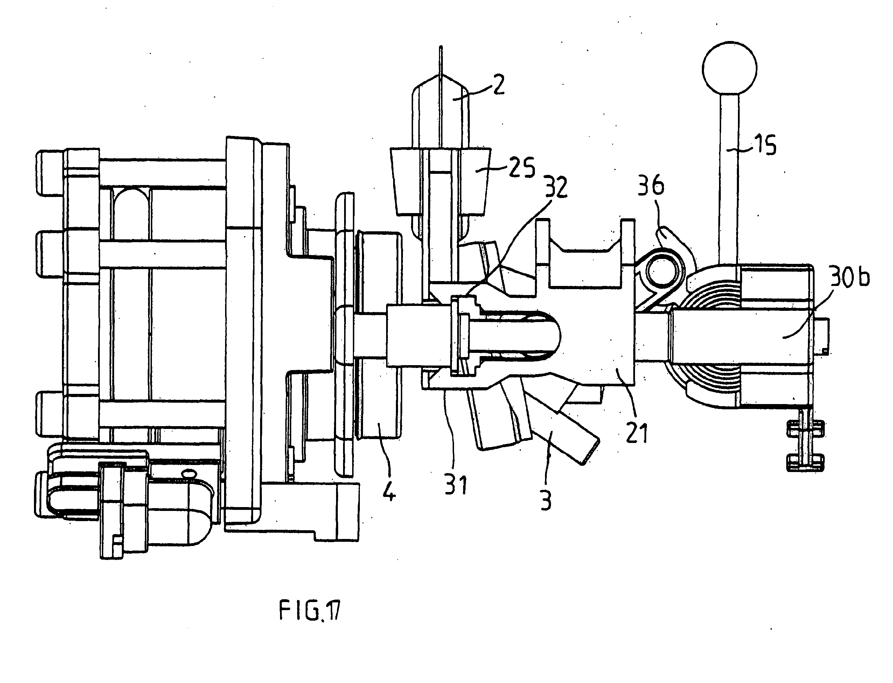

La translation de l'organe 21 est en outre guidée par des moyens de guidage qui pourront être constitués par deux guides latéraux 30a, 30b comme cela ressort de la figure 16.

Suivant une première possibilité, l'arbre 33 est entraîné en rotation par une motorisation.

Suivant une seconde possibilité, envisagée dans les figures, l'entraînement en rotation s'effectue par le biais d'un levier 15 pouvant être actionné par l'utilisateur.

Dans ce cadre, la partie mobile 3 est inclinée vers le bas pour réaliser une surface de butée 6 en sa portion supérieure pour coopérer avec la surface extérieure inférieure de la dosette 2.

La surface 6 constitue ainsi une butée en phase d'alimentation de la dosette 2.

Pour optimiser l'étanchéisation de la chambre d'infusion 1 en position fermée, il est avantageux d'ajouter à la pression de fermeture opérée par l'utilisateur au moyen du levier 15, une pression additionnelle.

Dans ce cadre, un moyen additionnel de serrage en fermeture des deux parties 3, 4 de la chambre d'infusion 1 est constitué en complément, comme décrit plus loin.

De façon avantageuse, le dispositif comprend également des moyens de guidage de la dosette 2 lors de son déplacement durant les phases de fonctionnement.

Dans ce cadre, on pourra constituer des moyens de guidage sous forme d'une glissière 25 constituée par deux rainures 26 aptes à encadrer la périphérie de la dosette 2.

La périphérie de ladite dosette 2 peut s'insérer dans chacune des rainures 26 ainsi constituées.

Des moyens de guidage sont avantageusement montés translatifs pour suivre le mouvement de rapprochement ou d'éloignement des deux parties.

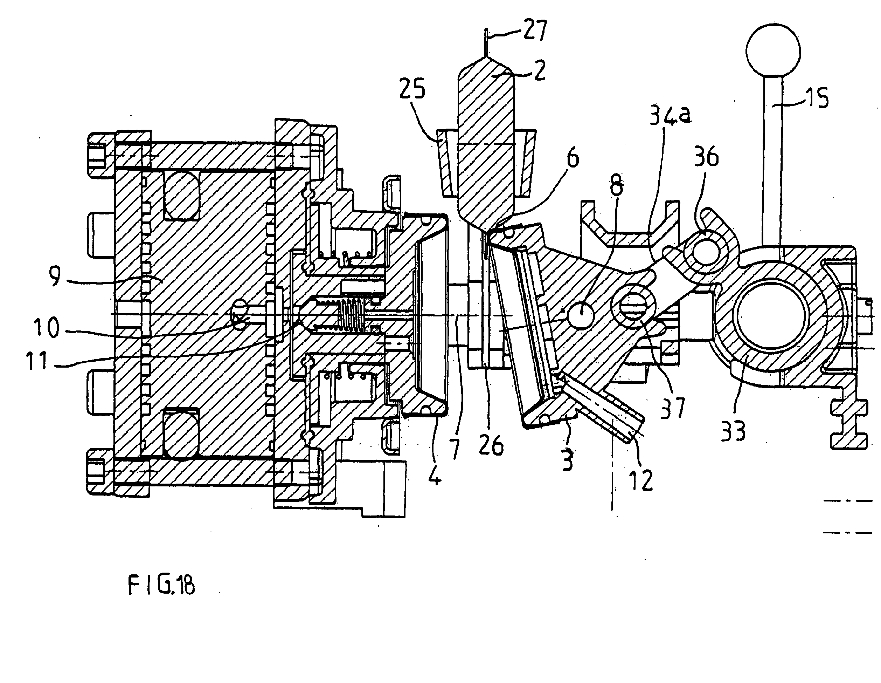

En ce sens, ces moyens ont un déplacement couplé à celui de l'organe translatif 21 par l'intermédiaire de poussoirs 31 représentés notamment en figure 17.

Le poussoir 31 comprend une partie en créneau 32 apte à constituer deux portions d'appui du poussoir 31 sur une surface correspondante des moyens de guidage.

De cette façon, le mouvement des moyens de guidage suit celui de l'organe translatif 21 au cours des phases de fonctionnement.

Par ailleurs, le vide constitué entre les deux surfaces d'appui formées par le créneau 32 assure un retard dans le déplacement des moyens de guidage apte à assurer d'abord une avance de la partie mobile 3 seule puis une avance couplée du moyen de guidage et de la partie mobile 3 vers la partie fixe 4.

Le système à poussoir ainsi constitué peut être réalisé de façon guidée autour de deux guides latéraux 30a, 30b assurant le guidage en translation des éléments mobiles et la cohésion des pièces constitutives du dispositif.

Les phases de fonctionnement du présent dispositif sont plus particulièrement illustrées aux figures 17 à 22 et permettent la réalisation des étapes de fabrication de la boisson avec les mêmes modifications de configuration de la chambre d'infusion 1 que dans le cas du 1^{er} mode de réalisation.

Les figures 17 et 18 montrent une première position de fonctionnement du dispositif dans laquelle la dosette 2 est en position de butée sur la paroi supérieure de la partie mobile 3.

Le levier 15 est lui dans une position angulaire prédéterminée ici verticale.

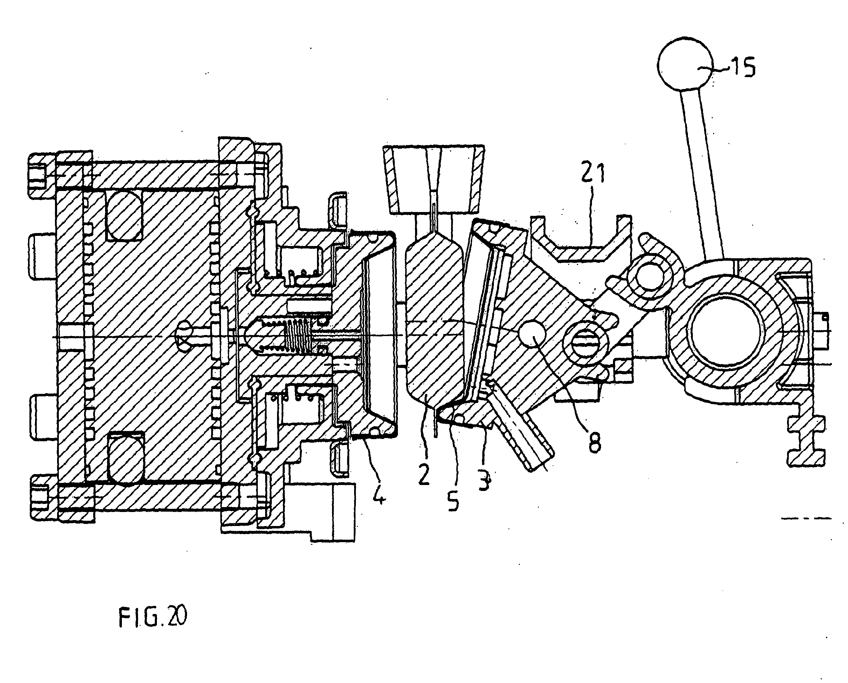

Un actionnement du levier 15 dans le sens trigonométrique permet de parvenir à la position illustrée aux figures 19 et 20 dans lesquelles la dosette 2 est reçue dans la partie mobile 3.

Entre ces deux phases de mouvement, l'arbre d'entraînement 33 a provoqué un appui de la biellette 34a sur la partie arrière de la partie mobile 3 et a particulièrement provoqué une rotation de la partie mobile dans le sens horaire.

En poursuivant la rotation du levier 15, l'arbre 33 engendre une poussée supplémentaire sur la partie mobile 3 par l'intermédiaire des biellettes 34a, 34b, cette poussée supplémentaire tendant à la translation de la partie mobile 3 et à sa fermeture pour constituer la chambre d'extraction 1.

On peut prévoir des surfaces de butée notamment sur l'organe translatif 21 pour limiter la mobilité angulaire de la partie mobile 3.

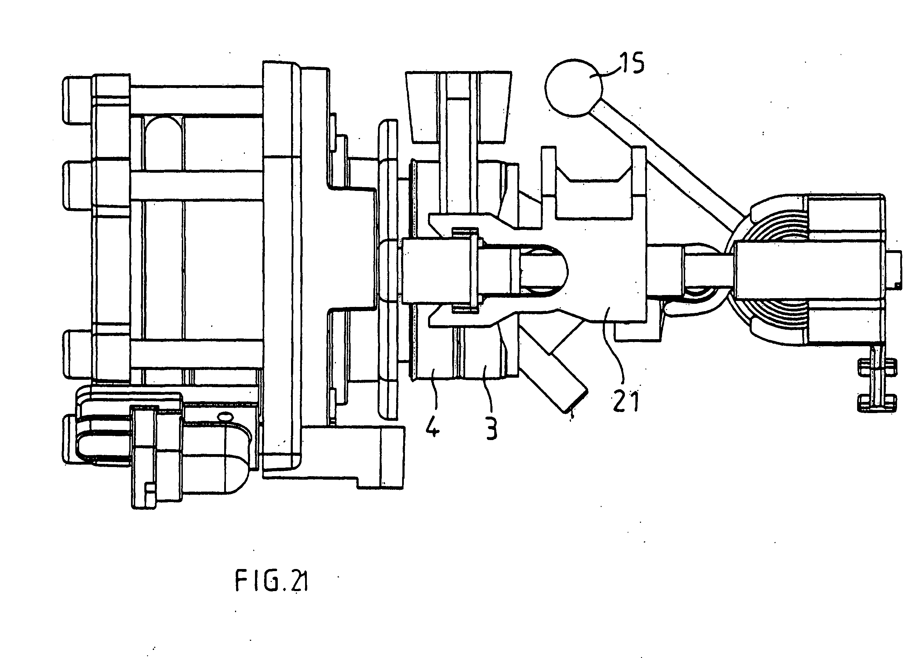

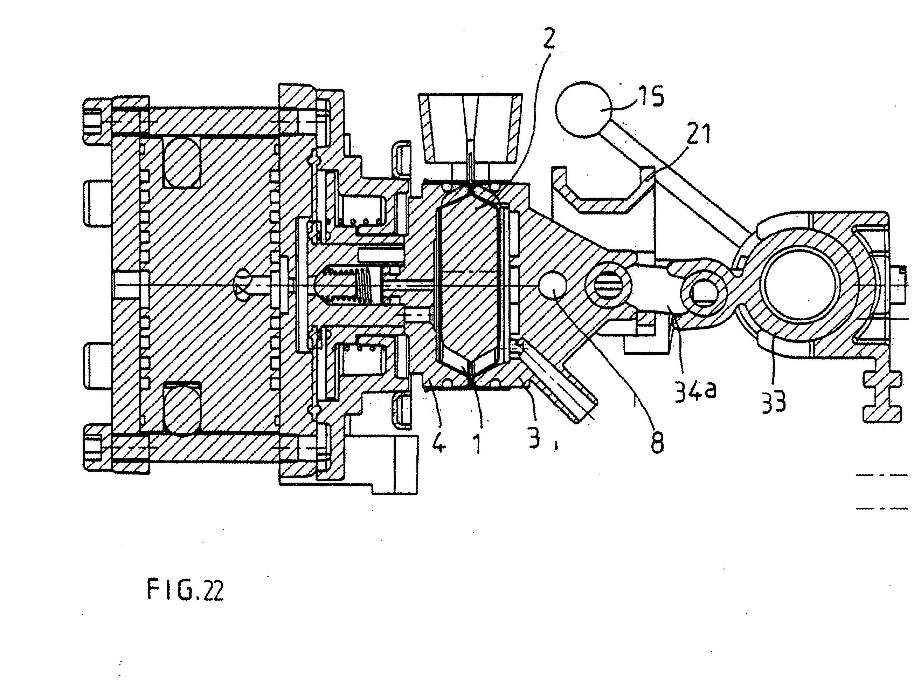

Ainsi, dans la position représentée aux figures 21 et 22, la partie mobile 3 clôt la chambre d'extraction 1.

Quand la chambre d'infusion est fermée, l'eau chaude est injectée dans la chambre d'infusion.

La boisson est récupérée dans la goulotte 13.

Dès que la lixiviation est opérée, un mouvement inverse de l'arbre 33 induit un recul de la partie mobile 3 et son pivot dans le sens trigonométrique.

La partie mobile s'esquivant, la dosette 2 peut être libérée et chuter par gravité vers une zone de récupération.

La position ainsi pivotée de la partie mobile 3 vers le bas assure la formation à nouveau de la surface 6 de butée d'alimentation en partie supérieure de la partie mobile 3.

Les figures 17, 19 et 21 illustrent en vue de côté la réalisation du mouvement de translation des moyens de guidage lorsque ceux-ci sont présents.

A ce sujet, on visualise le poussoir 31 apte à provoquer l'avancée des moyens de guidage 25 au fur et à mesure de l'avancée de la partie mobile 3.

Le créneau 32 présent sur le poussoir 31 assure cependant un retard dans la translation des moyens de guidage 25.

La fin de l'évacuation de la dosette 2 s'opère dès que la partie mobile 3 est reculée et alors que les moyens de guidage 25 sont encore en position.

Dans les deux modes de réalisation ainsi présentés, l'actionnement peut s'effectuer manuellement par le biais d'une poignée ou d'un levier. L'étanchéité est assurée ou parfaite par le biais des moyens additionnels de serrage. On obtient ainsi une machine de conception allégée tout en maintenant son efficacité et en particulier une bonne étanchéité.

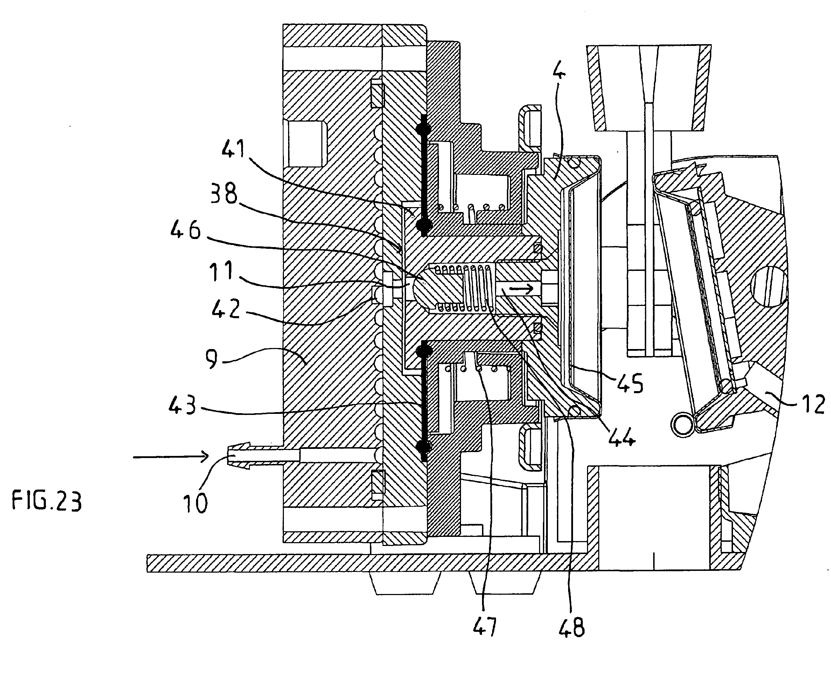

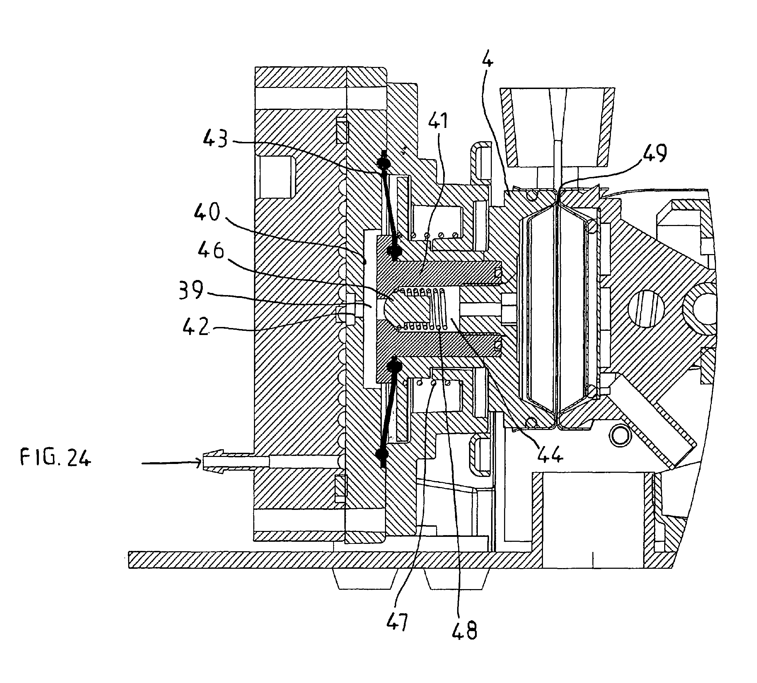

On décrit maintenant un mode de réalisation préféré des moyens additionnels de serrage, plus particulièrement en référence aux figures 23 et 24.

Dans le cas représenté aux figures 23 et 24, les moyens additionnels de serrage assurent un déplacement d'une faible course en translation de la partie fixe en rotation 4. De cette façon, dès que la partie mobile 3 est parvenue en position de fermeture de la chambre d'infusion 1, ce déplacement de faible course en translation permet d'assurer ou de renforcer l'appui relatif des deux parties 3, 4 au niveau de la zone périphérique de la dosette 2. On crée ainsi une zone d'étanchéité périphérique 49 particulièrement visible en figure 24.

Suivant le mode de réalisation illustré, les moyens de déplacement en translation sont formés par un vérin 38 ici implanté de façon caractéristique dans le dispositif. En effet, le vérin 38 est hydraulique et alimenté par la même source que la chambre d'infusion 1, à savoir la chaudière 9. De cette façon, les moyens additionnels de serrage ne nécessitent pas la formation d'un autre circuit hydraulique.

Comme visible aux figures 23 et 24, l'élément piston du vérin 38 est formé par un organe mobile 41 solidaire de la partie fixe en rotation 4 de façon à permettre son avancée ou son recul suivant la position d'activation du vérin 38. Le fluide sous pression (en particulier l'eau chaude issue de la chaudière 9) est apte à être reçu dans une chambre 39 pour réaliser la poussée de l'organe mobile 41. La chambre 39 est formée entre l'organe mobile 41 et une face 40 de la chaudière 9, la face 40 comprenant avantageusement un léger renfoncement permettant la formation d'un volume suffisant pour la chambre 39.

Au niveau de la face 40, la chaudière 9 comporte une sortie 42 permettant l'arrivée d'eau chaude dans la chambre 39.

Pour assurer la fermeture étanche de la chambre 39 du vérin 38, des moyens d'étanchéité sont présents. Ils peuvent être constitués par des joints mais, préférentiellement, par le biais d'une membrane élastique d'étanchéité 43 toujours visible aux figures 23 et 24.

La membrane élastique d'étanchéité est formée d'un élément sensiblement annulaire connecté de façon solidaire et étanche par sa périphérie extérieure au niveau de la face 40 de la chaudière et, par sa périphérie intérieure au niveau de l'organe mobile 41. La membrane élastique d'étanchéité 43 se déforme suivant l'état d'activation du vérin 38.

On comprend aisément que, lorsque l'eau chaude est admise dans la chambre 39 depuis la chaudière 9, le volume de la chambre 39 tend à augmenter et une pression est appliquée sur la face correspondante de l'organe mobile 41. Cette pression engendre le déplacement de l'organe mobile 41 et, partant, l'avancée de la partie fixe en rotation 4. Cet état avancé est représenté en figure 24. Dans ce cadre, le serrage est réalisé.

A ce stade, l'eau chaude peut être injectée au niveau de la partie 4 de façon à produire la lixiviation forcée dans la chambre d'infusion 1. Cette injection se produit au niveau d'une douchette 45 de conception courante constituant un revêtement intérieur de la partie 4.

L'injection de l'eau chaude dans la chambre d'infusion 1 est réalisée par l'intermédiaire d'un passage d'alimentation 44 mettant en relation la chambre 39 du vérin 38 et la douchette 45. Pour éviter une circulation d'eau vers la douchette 45, même en position de repos des moyens de serrage et en position d'ouverture de la chambre d'infusion 1, l'invention présente une caractéristique supplémentaire avantageuse.

En effet, tel que représenté aux figures 23 et 24, le passage d'alimentation 44 comprend une soupape 46 configurée pour n'ouvrir le passage d'alimentation 44 qu'au-delà d'un seuil de pression d'une valeur supérieure à la pression de travail du vérin 38.

De cette façon, l'admission d'eau chaude dans la chambre 39 par la sortie 42 de la chaudière 9 produit, dans un premier temps, l'activation du vérin 38 et l'avancée de la partie 4 pour produire le serrage additionnel.

Ensuite, lorsque le serrage est obtenu, la pression continue d'augmenter dans la chambre 39 jusqu'à parvenir à un niveau assurant le déplacement de la soupape 46 pour ouvrir le passage d'alimentation 44 et produire l'injection d'eau chaude dans la chambre d'infusion 1.

A titre d'exemple, il est possible de régler le seuil de pression de déclenchement de la soupape 46 à un niveau de l'ordre de 2 bars. Ce réglage peut être opéré par le choix du ressort 48 assurant le rappel en position de repos (d'obturation) de la soupape 46.

Lorsque l'injection d'eau est terminée dans la chambre d'infusion 1, on stoppe l'admission d'eau chaude dans la chambre 39 pour produire le retour en position de repos du vérin 38. Ce retour peut être induit par l'intermédiaire des propriétés élastiques de la membrane 43. En outre, un ressort de rappel 47 est également présent à cet effet.

De cette façon, lors d'un actionnement manuel, l'utilisateur n'a qu'à réaliser un actionnement d'effort limité pour mettre en position de fermeture ou d'ouverture la chambre d'infusion 1. Lorsque la fermeture est réalisée manuellement, les moyens additionnels de serrage assurent une parfaite étanchéité de la chambre d'infusion 1, au niveau de la zone d'étanchéité périphérique. La lixiviation peut alors se produire, et ce avec des pressions pouvant parfaitement correspondre aux pressions de machines de type espresso et en particulier de l'ordre de 15 bars.

Sans le recours à ces moyens additionnels de serrage, il serait particulièrement mal aisé, pour l'utilisateur, d'assurer manuellement la fermeture suffisamment étanche de la chambre d'infusion 1 pour fonctionner à de tels niveaux de pression.

### REFERENCES

- 1.: Chambre d'infusion
- 2.: Dosette
- 3.: Partie mobile
- 4.: Partie fixe
- 5.: Butée de réception
- 6.: Butée d'alimentation
- 7.: Axe de translation
- 8.: Axe de rotation
- 9.: Chaudière
- 10.: Circuit d'eau
- 11.: Admission
- 12.: Sortie
- 13.: Goulotte
- 14.: Entonnoir
- 15.: Levier
- 16.: Came
- 17.: Première surface
- 18.: Deuxième surface
- 19.: Bras pivotant
- 20.: Limiteur de course
- 21.: Organe translatif
- 22.: Doigt
- 23.: Fourchette
- 25.: Glissière
- 26.: Rainure
- 27.: Périphérie dosette
- 28.: Butée
- 29.: Axe de came
- 30a, 30b.: Guides latéraux
- 31.: Poussoir
- 32.: Créneau
- 33.: Arbre d'entraînement
- 34a, 34b.: Biellette
- 35.: Liaison pivot sur l'arbre
- 36.: Liaison pivot sur partie mobile
- 37.: Pièce de couplage
- 38.: Vérin
- 39.: Chambre du vérin
- 40.: Face
- 41.: Organe mobile
- 42.: Sortie
- 43.: Membrane
- 44.: Passage d'alimentation
- 45.: Douchette
- 46.: Soupape
- 47.: Ressort de rappel
- 48.: Ressort
- 49.: Zone d'étanchéité périphérique

## Revendications

1. Dispositif de production de boisson par infusion d'un produit contenu dans une dosette (2), comportant une chambre d'infusion (1) apte à recevoir une dosette (2) et comprenant deux parties (3,4) configurées pour être rapprochées ou éloignées pour fermer ou ouvrir la chambre d'infusion (1), dispositif tel que l'une seulement des parties a une mobilité en rotation apte à mettre en butée la dosette (2) dans ladite partie et que la partie mobile (3) en rotation a une mobilité en translation pour ouvrir ou fermer la chambre d'infusion (1), **caractérisé par le fait**
**qu'**il comporte des moyens additionnels de serrage en fermeture des deux parties de la chambre d'infusion (1) qui sont des moyens de déplacement en translation de la partie (4) fixe en rotation.

2. Dispositif selon la revendication 1 **caractérisé par le fait**
**que** les moyens de déplacement sont constitués par un vérin (38).

3. Dispositif selon la revendication 2 **caractérisé par le fait**
**que** le vérin (38) est hydraulique et alimenté par la chaudière (9) alimentant la chambre d'infusion (1).

4. Dispositif selon la revendication 3 **caractérisé par le fait**
**que** la chambre (39) du vérin (38) est formée entre une face (40) de la chaudière (9) et un organe mobile (41) solidaire de la partie fixe en rotation (4) de la chambre d'infusion (1), la face (40) comportant une sortie (42) d'alimentation en eau chaude.

5. Dispositif selon la revendication 4 **caractérisé par le fait**
**qu'**il comporte une membrane élastique d'étanchéité (43) entre ladite face (40) et ledit organe mobile (41) pour fermer de façon étanche la chambre (39) du vérin (38).

6. Dispositif selon la revendication 4 ou la revendication 5 **caractérisé par le fait que** :
- l'organe mobile (41) comporte un passage d'alimentation (44) de la chambre d'infusion (1) formé entre la chambre (34) du vérin (38) et une douchette (45) présente sur la partie fixe en rotation (4),
- le passage d'alimentation (44) présente une soupape (46) configurée pour ouvrir le passage d'alimentation (44) à partir d'une pression supérieure à la pression de travail du vérin (38).

7. Dispositif selon l'une quelconque des revendications 4 à 6 **caractérisé par le fait**
**qu'**il comporte un ressort de rappel (47) de l'organe mobile (41) du vérin (38).

8. Dispositif selon l'une quelconque des revendications 1 à 7 **caractérisé par le fait**
**qu'**il comporte un moyen d'entraînement commun pour la mobilité en rotation et la mobilité en translation de la partie mobile (3).

9. Dispositif selon la revendication 8, **caractérisé par le fait**
**que** le moyen d'entraînement est une came (16) présentant :
• une première surface extérieure (17) d'appui d'un organe translatif (21) couplé à la partie mobile (3) ;
• une deuxième surface extérieure (18) d'appui d'une extrémité d'un bras pivotant (19) couplé à la partie mobile (3) ;

10. Dispositif selon la revendication 9, **caractérisé par le fait**
**que** la came (16) est actionnée en rotation par un levier (15).

11. Dispositif selon la revendication 8 **caractérisé par le fait**
**que** le moyen d'entraînement commun comporte un arbre d'entraînement (33) rotatif couplé à la partie mobile (3) par au moins une biellette (34a, 34b) montée pivotante entre ledit arbre d'entraînement (33) et ladite partie mobile (3).

12. Dispositif selon la revendication 11, **caractérisé par le fait**
**qu'**il comporte un organe translatif (21) solidaire de la partie mobile (3) dans son mouvement de translation et par rapport auquel elle est mobile en rotation.

13. Dispositif selon la revendication 12 **caractérisé par le fait**
**qu'**il présente des moyens (30a, 30b) de guidage en translation de l'organe translatif (21).

14. Dispositif selon l'une quelconque des revendications 11 à 13, **caractérisé par le fait**
**que** l'arbre (33) est actionné en rotation par un levier (15).

15. Dispositif selon l'une quelconque des revendications 1 à 14, **caractérisé par le fait**
**qu'**il comporte des moyens de guidage de la dosette (2).

16. Dispositif selon la revendication 15, **caractérisé par le fait**
**que** les moyens de guidage comprennent une glissière (25) avec au moins une rainure (26) apte à recevoir la périphérie (27) d'une dosette.

17. Dispositif selon les revendications 15 ou 16, **caractérisé par le fait**
**que** les moyens de guidage sont montés translatifs pour suivre le mouvement de rapprochement ou d'éloignement des parties.

18. Dispositif selon l'une quelconque des revendications 1 à 17, **caractérisé par le fait**
**que** la mobilité de la partie mobile (3) est configurée pour faire face à la partie fixe (4) de façon parallèle avant leur mise en contact, durant la phase de fermeture de la chambre d'infusion (1).

## Claims

1. Device for making a beverage by infusion of a product contained in a pre-packed dose (2), comprising an infusion chamber (1) able to receive a dose (2), and comprising two parts (3, 4) designed to be moved closer or apart in order to close or open infusion chamber (1), such that only one of the parts is mobile in rotation thereby enabling it to block dose (2) in the aforementioned part and that, in rotation, moving part (3) has translatory mobility enabling it to open or close infusion chamber (1), **characterised in that**
it includes additional means for closing tight the two parts of infusion chamber (1) consisting of means for translatory movement of part (4) which is fixed in rotation.

2. Device according to claim 1 **characterized in that**
the movement is obtained by means of a hydraulic cylinder (38).

3. Device according to claim 2 **characterized in that**
hydraulic cylinder (38) is fed by boiler (9) supplying infusion chamber (1).

4. Device according to claim 3 **characterized in that**
chamber (39) of cylinder (38) is formed between one face (40) of boiler (9) and a mobile body (41) joined to the fixed rotating part (4) of infusion chamber (1), face (40) having a hot water outlet (42).

5. Device according to claim 4 **characterized in that**
it includes an elastic sealing membrane (43) between aforementioned face (40) and aforementioned mobile body (41) which closes tight chamber (39) of cylinder (38).

6. Device according to claim 4 or claim 5 **characterized in that**:
- mobile body (41) has a passage (44) supplying infusion chamber (1) formed between chamber (34) of cylinder (38) and a spray head (45) on fixed rotating part (4),
- supply passage (44) has a valve (46) configured to open passage (44) when the pressure rises above the working pressure of cylinder (38).

7. Device according to any of claims 4 to 6 **characterized in that**
it has a return spring (47) for mobile body (41) of cylinder (38).

8. Device according to any of claims 1 to 7 **characterized in that**
it has common drive means ensuring rotational mobility and translatory mobility of moving part (3).

9. Device according to claim 8 **characterized in that** the drive means is a cam (16) presenting:
- a first external support surface (17) of a translatory body (21) coupled to moving part (3);
- a second external support surface (18) of one end of a pivoting arm (19) coupled to moving part (3).

10. Device according to claim 9 **characterized in that** cam (16) is actuated in rotation by a lever (15).

11. Device according to claim 8 **characterized in that**
the common drive means include a rotary drive shaft (33) coupled to moving part (3) by at least one rod (34a, 34b) fitted to pivot between aforementioned drive shaft (33) and aforementioned moving part (3).

12. Device according to claim 11 **characterized in that**
it has a translatory body (21) which is joined to moving part (3) in its translatory movement and relative to which it is rotationally mobile

13. Device according to claim 12 **characterized in that**
it has means (30a, 30b) for translational guidance of translatory body (21).

14. Device according to any of claims 11 to 13 **characterized in that**
shaft (33) is actuated in rotation by a lever (15).

15. Device according to any of claims 1 to 14 **characterized in that**
it has means for guiding dose (2).

16. Device according to claim 15 **characterized in that**
the guide means include a slide (25) with at least one groove (26) that is able to receive edging (27) of a dose.

17. Device according to claim 15 or 16, **characterized in that**
the guide means are mounted in translation so as to follow the movement of the parts closer or apart.

18. Device according to any of claims 1 to 17 **characterised in that**
the mobility of moving part (3) is arranged so that it faces fixed part (4) in a parallel manner before they come into contact during the closing phase of infusion chamber (1).

## Patentansprüche

1. Vorrichtung zur Herstellung von Getränken durch Brühen eines in einer Dosette (2) enthaltenen Produkts mit einer Brühkammer (1), welche die Dosette (2) aufnehmen kann und mit zwei Teilen (3, 4), die so gestaltet sind, dass sie voneinander entfernt oder einander angenähert werden können, um die Brühkammer (1) zu schließen oder zu öffnen, wobei die Vorrichtung so gestaltet ist, dass nur eines der Teile in der Weise drehbar gelagert ist, dass die Dosette (2) in dem genannten Teil zum Anschlag gebracht werden kann und dass der drehbar gelagerte Teil (3) auch translatorisch beweglich ist, um die Brühkammer (1) zu öffnen oder zu schließen, **gekennzeichnet dadurch,**
**dass** sie zusätzliche Klemmeinrichtungen zum Schließen der beiden Teile der Brühkammer(1) besitzt, welche die Mittel zur translatorischen Bewegung des drehfesten Teils (4) sind.

2. Vorrichtung gemäss Anspruch 1, **gekennzeichnet dadurch,**
**dass** die Mittel zur translatorischen Bewegung aus einem Stellglied (38) bestehen.

3. Vorrichtung gemäss Anspruch 2, **gekennzeichnet dadurch,**
**dass** das Stellglied (38) hydraulischer Art ist und von dem die Brühkammern versorgenden Kessel (9) versorgt wird.

4. Vorrichtung gemäss Anspruch 3, **gekennzeichnet dadurch,**
**dass** die Kammer (39) des Stellglieds (38) von einer Seite (40) des Kessels (9) und einem beweglichen, mit dem drehfesten Teil (4) der Brühkammer (1) fest verbundenen Organ (41) gebildet wird und die Seite (40) einen Ausgang (42) der Wasserversorgung aufweist.

5. Vorrichtung gemäss Anspruch 4, **gekennzeichnet dadurch,**
**dass** sie eine elastische Dichtungsscheibe (43) zwischen der genannten Seite (40) und dem beweglichen Organ (41) besitzt, um die Kammer (39) des Stellglieds (38) dicht zu schließen.

6. Vorrichtung gemäss Anspruch 4 oder Anspruch 5, **gekennzeichnet dadurch, dass**
- das bewegliche Organ (41) einen Durchgang (44) zur Beschickung der Brühkammer (1) besitzt, der zwischen der Kammer (34) des Stellglieds (38) und einer im drehfesten Teil (4) vorhandenen Brause (45) ausgebildet ist,
- der Durchgang (44) ein Ventil (46) besitzt, das so gestaltet ist, dass es den Durchgang (44) öffnet, wenn der Druck größer als der Arbeitsdruck des Stellglieds (38) ist.

7. Vorrichtung gemäss einem der Ansprüche 4 bis 6, **gekennzeichnet dadurch,**
**dass** sie eine Rückholfeder (47) für das bewegliche Organ (41) des Stellglieds (38) besitzt.

8. Vorrichtung gemäss einem der Ansprüche 1 bis 7, **gekennzeichnet dadurch,**
**dass** sie ein gemeinsames Antriebsmittel für die translatorische und die Drehbewegung des beweglichen Teils (3) besitzt.

9. Vorrichtung gemäss Anspruch 8, **gekennzeichnet dadurch,**
**dass** das Antriebsmittel ein Nocken (16) ist,
- der eine externe Auflagefläche (17) für ein Translationsorgan (21) besitzt, das an das bewegliche Teil (3) gekoppelt ist,
- der eine weitere externe Auflagefläche (18) für einen Schwenkarm (19) besitzt, der an das bewegliche Teil (3) gekoppelt ist.

10. Vorrichtung gemäss Anspruch 9, **gekennzeichnet dadurch,**
**dass** der Nocken (16) durch einen Hebel (15) gedreht wird.

11. Vorrichtung gemäss Anspruch 8, **gekennzeichnet dadurch,**
**dass** das gemeinsame Antriebsmittel eine drehbare Antriebswelle (33) besitzt, die über mindestens eine, zwischen der genannten Antriebswelle (33) und dem beweglichen Teil (3) schwenkbare Steuerstange (34a, 34b) an den beweglichen Teil (3) gekoppelt ist.

12. Vorrichtung gemäss Anspruch 11, **gekennzeichnet dadurch,**
**dass** sie ein mit dem beweglichen Teil (3) bei seiner Translationsbewegung verbundenes Translationsorgan (21) besitzt, in bezug auf das es drehbar ist.

13. Vorrichtung gemäss Anspruch 12, **gekennzeichnet dadurch,**
**dass** sie Mittel (30a, 30b) zur Führung des Translationsorgans (21) bei seiner Translationsbewegung besitzt.

14. Vorrichtung gemäss einem der Ansprüche 11 bis 13, **gekennzeichnet dadurch,**
**dass** die Welle (33) durch einen Hebel (15) gedreht wird.

15. Vorrichtung gemäss einem der Ansprüche 1 bis 14, **gekennzeichnet dadurch,**
**dass** sie Führungen für die Dosette (2) besitzt.

16. Vorrichtung gemäss Anspruch 15, **gekennzeichnet dadurch,**
**dass** die Führungen eine Gleitbahn (25) mit mindestens einer Nut (26) besitzen, die den Rand (27) einer Dosette aufnehmen kann.

17. Vorrichtung gemäss Anspruch 15 oder 16, **gekennzeichnet dadurch, dass** die Führungen translatorisch beweglich sind, um der Bewegung der Teile bei ihrer Annäherung, oder wenn sie sich voneinander entfernen, zu folgen.

18. Vorrichtung gemäss einem der Ansprüche 1 bis 17, **gekennzeichnet dadurch,**
**dass** die Beweglichkeit des beweglichen Teils (3) derart gestaltet ist, dass es während der Schließphase der Brühkammer (1), dem unbeweglichen Teil (4), bevor sie sich berühren, parallel gegenüber gestellt werden kann.
